# EUROPEAN PATENT APPLICATION

(11) **EP 2 738 054 A2**
(43) Date of publication of application: **04.06.2014**
(21) Application number: 13193965.4
(22) Date of filing: 22.11.2013
(51) Int. Cl.: B60S 1/24

(54) **Vehicle wiper system and crank and connecting rod mechanism thereof**

(30) Priority: 03.12.2012 CN 201210509269
(71) Applicant: Bosch Automotive Products (Changsha) Co., Ltd, Changsha, Hunan 410100 (CN)
(72) Inventor: Zimmer, Joachim, 410100 Changsha Hunan (CN); Cheng, Nairui, 410100 Changsha Hunan (CN); Zhu, Hansong, 410100 Changsha Hunan (CN)
(74) Representative: Isarpatent

(57) **Abstract**

The invention relates to a crank (50) and connecting rod mechanism (3) for a wiper system comprising a crank (50) which is configured to be connected to an output shaft of a driving assembly (2) of the wiper system (1) and is configured for outputting a rotational movement of the output shaft; a connecting rod (20) which is configured to be connected to a wiper arm of the wiper system (1) and is configured for driving the wiper arm to perform a reciprocating swinging movement; and a joint assembly which is configured for connecting the crank and the connecting rod, the joint assembly comprising: a ball pin (30) connected to the connecting rod (20); and a slider, the ball pin (30) being connected to the slider, and the slider and the output shaft being connected to two opposite ends of the crank (50), wherein the slider and the connecting rod connected thereto slides in a direction along the length of the crank (50) relative to the crank (50) in a state that a force in the direction transferred to the slider via the connecting rod and the ball pin (30) is greater than a certain critical value. The invention also relates to a wiper system (1) comprising the above crank and connecting rod mechanism.

## Description

### Technical Field

The invention relates to a wiper system for a vehicle being capable of providing snow-load protection (SLP), and in particular, relates to a crank and connecting rod mechanism of the wiper system.

### Background Art

A wiper system for a vehicle is configured for removing defoliation, precipitations, dirt, or snow on a windshield. In particular, in a snow or heavy snow weather, heavy snow accumulated in a wiping region of a windshield causes high loads to be applied on the components of the wiper system and connections between the components.

A wiper system comprises a crank and connecting rod mechanism which is composed of a crank, a connecting rod and a joint assembly connecting the crank with the connecting rod, the crank and connecting rod mechanism being configured for converting a rotational movement of an output shaft of a driving assembly of the wiper system into a reciprocatingly swinging movement of a wiper arm of the wiper system. If snow accumulated on the windshield is too thick, the snow loads the wiper system, and then the components of the wiper system and connections between the components have to handle high forces and torques. This may cause the wiper system to stop operating, the swinging movement of cause the wiper arm to be blocked from continuously moving, or even cause plastic components of the wiper system to be bended, deformed or broken.

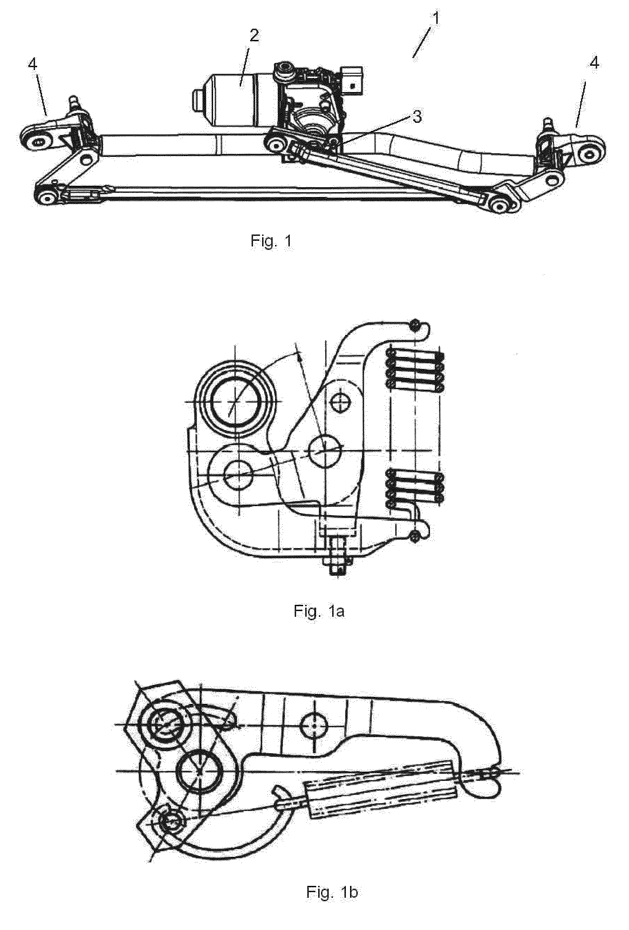

Measures have been taken to solve the problems mentioned above, for example, two examples of which are shown in Figures 1a and 1b. However, a crank and connecting rod mechanism of a wiper system shown in the drawings has a complex structure and a large amount of components, and comprises two cranks, a spring, a connecting pin and a ball socket etc.

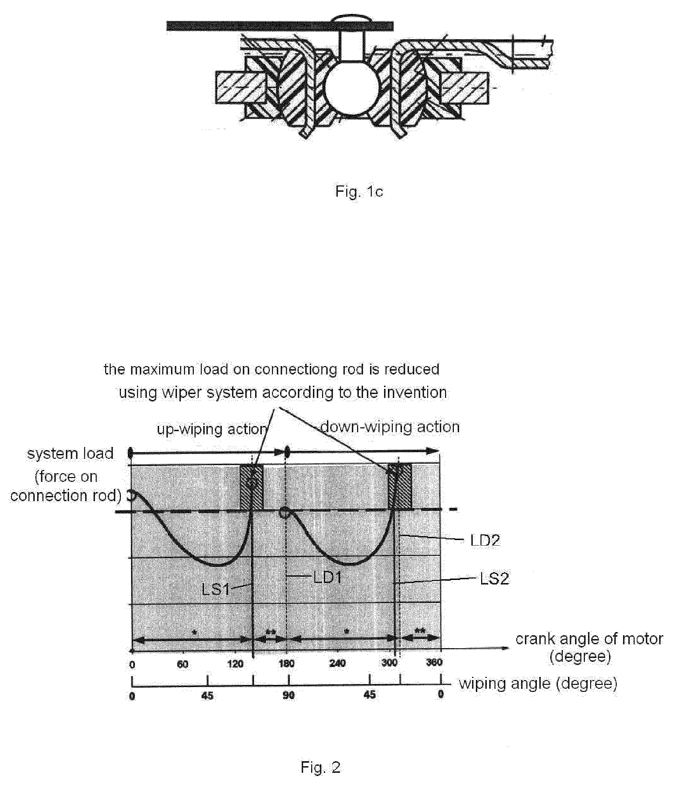

Figure 1c shows a concentric double ball joint used in a wiper system according to the prior art.

### Summary of the Invention

An object of the invention is to simply a wiper system in a manner that the wiper system thus formed has a snow-load protection function, and in particular, and to simply a crank and connecting rod mechanism of the wiper system by decreasing effective radius of the crank and thus reducing a wiping angle.

According to a first aspect of the invention, a crank and connecting rod mechanism for a wiper system is provided, which comprises a crank which is configured to be connected with an output shaft of a driving assembly of the wiper system and is configured for outputting a rotational movement of the output shaft; a connecting rod which is configured to be connected with a wiper arm of the wiper system and is configured for driving the wiper arm to reciprocatingly swing; and a joint assembly which is configured for connecting the crank with the connecting rod, the joint assembly comprising a ball pin connected with the connecting rod and a slider connected to the ball pin, the slider and the output shaft being connected to opposite ends of the crank, wherein the slider and the connecting rod connected thereto are slidable in a direction along the length of the crank relative to the crank when a force in this direction transferred to the slider via the connecting rod and the ball pin is larger than a certain critical value.

According to a preferred embodiment, the crank is formed with a slot extending in the direction along the length of the crank, and the sliding member is mounted in the slot and is slidable in the slot relative to the crank.

According to a preferred embodiment, an elastic member is provided between the crank and the sliding member in the direction along the length of the crank, and wherein when the force in the length direction of the crank transferred to the sliding member via the connecting rod and the ball pin is larger than an inherent spring force of the elastic member, the elastic member is compressed, and the sliding member and the connecting rod connected with it slide in the direction along the length of the crank relative to the crank.

According to a preferred embodiment, the elastic member comprises one or more springs.

According to a preferred embodiment, the sliding member is formed with a hole extending in an extending direction of a central axis of the ball pin, and a ball portion of the ball pin is fixed in the hole, and wherein the extending direction of the central axis of the ball pin is perpendicular to the direction along the length of the crank.

According to a preferred embodiment, the sliding member is formed integrally with the ball pin.

According to a preferred embodiment, the slot of the crank opens in the direction along the length of the crank at an end opposite to an end where the crank is connected with an end of the output shaft, and is defined by first and second edges in the direction along the length of the crank and a third edge perpendicular to the first and second edges, and wherein the crank and connecting rod mechanism further comprises a stop for closing the sliding member in the slot.

According to a preferred embodiment, the slot of the crank is formed closed in the crank, and is defined by first and second edges in the direction along the length of the crank and third and fourth edges perpendicular to the first and second edges, and wherein the third edge is closer to the end of the crank at which the crank is connected with the output shaft than the fourth edge.

According to a preferred embodiment, the sliding member has an H shape, the sliding member comprises opposite first and second side surfaces which are parallel to the direction along the length of the crank when the sliding member is assembled on the crank, the first and second side surfaces are formed with first and second notches respectively, and the first and second notches being configured for receiving the first and second edges when the sliding member is mounted in the slot of the crank.

According to a preferred embodiment, the crank and connecting rod mechanism further comprises protruding portions, the protruding portions protrude perpendicularly and sysmetrically from inner surfaces of the first and second edges into the slot, the protruding portions do not extend over the entire length of the respective edges in the direction along the length of the crank and have a first distance from an inner surface of the third edge, and the protruding portions has a thickness smaller than that of the crank and is centered in a thickness direction of the crank.

According to a preferred embodiment, the sliding member comprises an end surface which is parallel to the direction of the central axis of the ball pin when it is mounted on the crank, and the end surface is formed with a third notch.

According to another aspect of the invention, a wiper system is provided, which comprises a driving assembly which is configured for driving the wiper system and comprising an output shaft, the output shaft being configured for outputting a rotational movement; a crank and connecting rod mechanism according to any one of claims 1-11, the crank of the crank and connecting rod mechanism being connected with the output shaft; and a wiper arm which is configured to be connected with the connecting rod of the crank and connecting rod mechanism, the rotational movement of the output shaft of the driving assembly being converted into reciprocatingly swinging movement of the wiper arm via the crank and connecting rod mechanism.

A crank and connecting rod mechanism according to the invention comprises a sliding ball socket and a sliding member. When a force acted on the connecting rod of a wiper system is larger than a predetermined spring force, the sliding member is to be slided against the spring force so that an effective radius of a crank is shortened and a wiping angle of the wiper system is reduced. In this way, the wiping action of a wiper arm of the wiper system would not be stopped and a snow-load protection function is achieved.

The above problems are solved by providing a wiper system according to the invention with a sliding ball socket with a special structure, so that a crank and connecting rod mechanism comprises a small amount of components, has a simple structure, and is easy to manufacture and assemble, the related costs of the wiper system is thus reduced, and correspondingly the market competitiveness is improved.

### Brief Description of the Drawings

The above and other features and advantages of the invention will be better understood from the description of preferred embodiments of the invention in conjunction with the drawings, in which:
Figure 1 is an illustrative view of a wiper system according to the prior art;
Figures 1a and 1b are schematical views of cranks of wiper systems according to the prior art;
Figure 1c is a schematical view of a concentric double ball joint used in a wiper system according to the prior art;
Figure 2 is a graph of a force applied to a connecting rod during a wiping cycle of a wiper arm of a wiper system according to the invention;
Figure 3 illustrates an action principle of a crank and connecting rod mechanism of a wiper system according to the invention;
Figures 4a-4b show a front view and a top view of the crank and connecting rod mechanism according to the invention respectively;
Figure 5 shows an exploded view of the crank and connecting rod mechanism according to the invention;
Figures 6a-6b show an exploded view and an assembled view of a crank and connecting rod mechanism according to a first embodiment of the invention respectively;
Figures 7a-7b show an exploded view and an assembled view of a crank and connecting rod mechanism according to a second embodiment of the invention respectively;
Figures 8a-8b show an exploded view and an assembled view of a crank and connecting rod mechanism according to a third embodiment of the invention respectively;
Figures 9a-9d show various examples of a sliding ball socket of the crank and connecting rod mechanism according to the invention;
Figures 10a-10b show an exploded view and an assembled view of a crank and connecting rod mechanism according to a fourth embodiment of the invention respectively;
Figures 11a-11d show various examples of a sliding ball socket of the crank and connecting rod mechanism according to the invention;
Figure 12 shows a top view of a crank and connecting rod mechanism according to a fifth embodiment of the invention;
Figures 13a-13h show cross sectional views of the crank and connecting rod mechanisms according to various embodiments of the invention;
Figures 14a-14b are views of various arrangements of a spring of the crank and
connecting rod mechanisms according to the invention; and
Figures 15a-15b show a front view and a top view of a crank and connecting rod mechanism according to a sixth embodiment of the invention respectively.

### Detailed Description of Preferred Embodiments

A wiper system according to the invention will be described by way of various embodiments with reference to the drawings.

A wiper system 1 is shown in Figure 1, wherein the wiper system 1 comprises a driving assembly 2, a crank and connecting rod mechanism 3 and two wiper arm assemblies 4 respectively at a driver side and at a passenger side. The driving assembly 2 is configured for providing power for the wiper system 1 and comprises a motor and a reducer mechanism, an output shaft of the reducer mechanism outputting a rotational movement. The crank and connecting rod mechanism 3 comprises a crank connected with the output shaft of the driving assembly 2, a connecting rod connected with the wiper arm assembly 4, and a joint assembly connecting the crank with the connecting rod, and is configured for converting the rotational movement into a reciprocatingly swinging movement of a wiper arm of the wiper arm assembly. The wiper arm assembly comprises the wiper arm swinging reciprocatingly on a windshield of a vehicle.

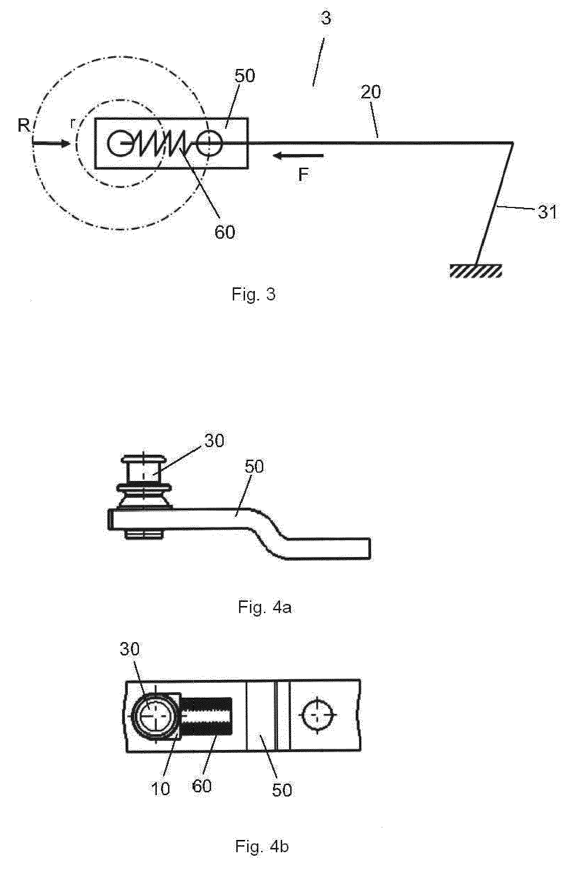

The crank and connecting rod mechanism 3 of the wiper system 1 according to the invention comprises the crank, the connecting rod and the joint assembly connecting the crank with the connecting rod. Figure 3 is a simplified view of the crank and connecting rod mechanism, in which a reference number 31 denotes the wiper arm of the wiper system, a reference number 50 denotes the crank of the wiper system, and a reference number 20 denotes the connecting rod. A spring 60 is provided between the crank and the connecting rod with an end secured to the crank and another end secured to a sliding ball socket connected with the connecting rod.

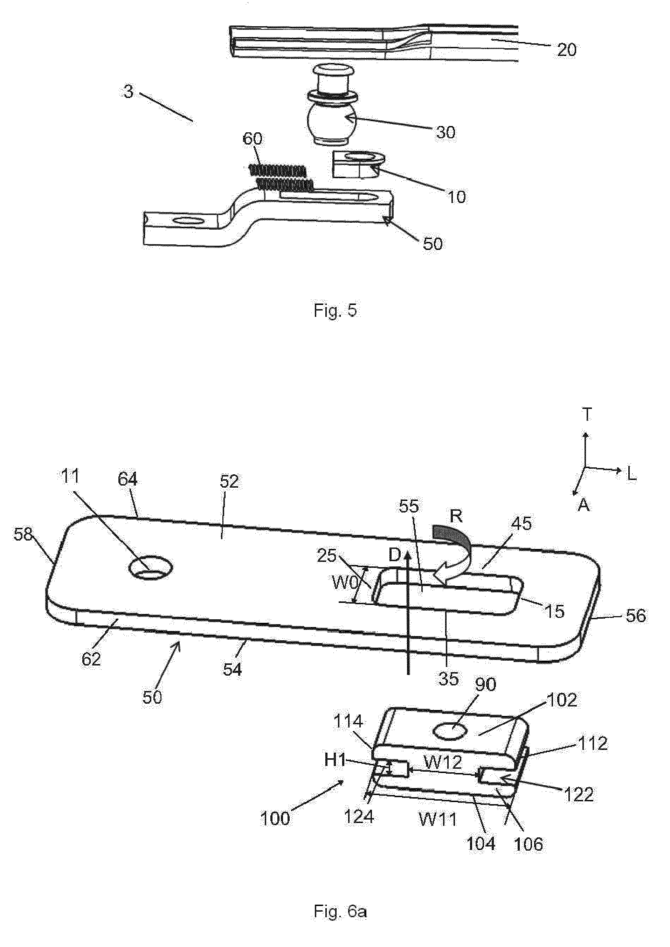

Figures 4a and 4b show assembled views of a portion of the crank and connecting rod mechanism 3 according to the invention, and Figure 5 shows an exploded view of the crank and connecting rod mechanism 3 according to the invention. The connecting rod 20 of the crank and connecting rod mechanism 3 is rigidly connected with an end of a ball pin 30. A ball portion at another end of the ball pin 30 is accommodated in hole formed in a sliding ball socket 10, the sliding ball socket 10 being slidable in a direction along the length of the crank 50 in a slot 55 of the crank 50, constituting a connecting portion of the connecting rod 20 and the crank 50.

Embodiments of the crank and connecting rod mechanism 3 may not have the same exact structure but share the same action principle. When the wiper arm of the wiper system 1 swings on the windshield, heavy snow accumulated causes a huge resistance to be applied to the wiper arm and the connecting rod 20 connected with the wiper arm. When a force F in the direction along the length of the crank 50 acted on the connecting rod 20 (Figure 3) is larger than an inherent spring force of the spring 60 of the crank and connecting rod mechanism 3, the sliding ball socket 10, the ball pin 30 and the connecting rod 20 connected with the ball pin 30 compress the spring 60 against its spring force, and the connecting portion of the connecting rod 20 and the crank 50 is moved toward a connecting portion of the crank 50 and the output shaft (not shown), which reduces an effective radius of the crank 50 and thus a wipe angle of the wiper arm. The possibility of the pendulum movement of the wiper arm being blocked by the cumulative snow is avoided effectively.

Figure 2 is a graph of a force applied to the connecting rod 20 during a wiping cycle of the wiper arm of the wiper system 1. The wiper arm carries out the wiping cycle, comprising an up-wiping action and a down-wiping action, when the crank 50 of the wiper system 1 is rotated by a turn (360°). In the drawings, vertical broken lines LD1 and LD2 are idea ending positions of the up-wiping action and the down wiping action of the wiper arm of the wiper system. A shadow area is an area in which a force acted on the connecting rod is maximum during the up-wiping action and the down wiping action, and the wiper arm will be stopped from continuously swinging when the wiper arm has a wiping angle in this area. Vertical solid lines LS1 and LS2 are ending positions of the wiper arm of the wiper system according to the invention. This means that the length of the crank can be reduced from R to r before the resistance acted on the connecting rod of the wiper system according to the invention reaches a threshold value which may cause the wiper arm to stop swinging. At this time, the wiping angle will not increase any longer, and the wiper arm is kept remaining at the ending positions of LS1 and LS2. The range of the wiping angle of the wiper arm during the up-wiping action and the down wiping action only cover a segment marked "*" in the graph, which prevents the wiper system 1 from reaching in a segment marked "**" in the graph and from being stopped.

A crank and connecting rod mechanism of a wiper system according to the invention will be described in detail with reference to the drawings. In the following description, a direction in which a spring extends (retracts) is defined as a longitudinal direction L, and a side at which a sliding ball socket is attached to a crank is defined as a right side, with the opposite side as a left side. A direction of the thickness of the crank, i.e. the direction in which a central axis of a ball pin extends is defined as a transverse direction T. The term "upward" refers to a direction from the crank toward the connecting rod along the transverse direction T, and the term "downward" refers to an opposite direction. A lateral direction A is defined as a direction perpendicular to both the longitudinal direction and the transverse direction. Of course, the directions may vary according to the actual mounting direction of the crank and connecting rod mechanism.

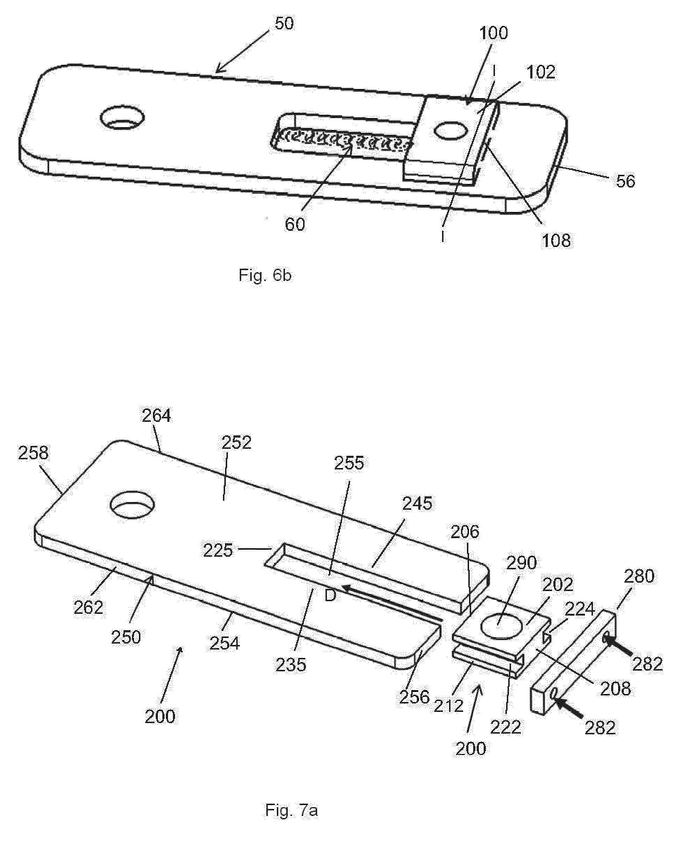

Figures 6a and 6b show a first embodiment according to the invention, in which a sliding ball socket is designated with a reference number 100.

A crank 50 comprises opposite upper and lower surfaces 52 and 54 in the transverse direction T, opposite right and left end surfaces 56 and 58 in the longitudinal direction L, and opposite side surfaces 62 and 64 in the lateral direction A.

The crank 50 is formed with a slot 55 at an end proximate to the right end surface 56 and a hole 11 at an end proximate to the left end surface 58, the hole 11 being configured for connecting with an output shaft of a driving assembly of a wiper system. The slot 55 extends through the thickness of the crank 50 in the transverse direction T and elongates in the longitudinal direction L, and is defined by edges 15, 25, 35 and 45.

The sliding ball socket 100 comprises opposite upper and lower surfaces 102 and 104, opposite side surfaces 106 and 108 and opposite side surfaces 112 and 114. The side surfaces 112 and 114 of the sliding ball socket 100 are provided with notches 122 and 124 respectively, and the notches 122 and 124 are symmetrical and recessed into the sliding ball socket 100 perpendicularly to respective side surfaces.

The sliding ball socket 100 is sized so that the distance W11 between the side surfaces 112 and 114 is larger than the width W0 of the slot 55, and the distance W12 between the notches 122 and 124 is substantially equal to the width W0. The notches 122 and 124 have a depth H1 substantially equal to the thickness H0 of the crank 50.

When the sliding ball socket 100 is mounted on the crank 50, 1) firstly, as shown in Figure 6a, the sliding ball socket 100 is mounted into the slot 55 of the crank 50 from the lower surface 54 upwards along an arrow D, with the upper surface 102 of the sliding ball socket 100 upwards and the lower surface 104 downwards. 2) Secondly, the sliding ball socket 100 is rotated by 90° (an arrow R) in a plane defined by the longitudinal direction L and the lateral direction A, so that the side surface 108 of the sliding ball socket 100 points the right end surface 56, the side surfaces 112 and 114 are adjacent to the side surface 62 and 63 respectively, and then the notches 122 and 124 are snapped onto the edges 35 and 45 defining the slot 55. The sliding ball socket 100 and the crank 50 are locked together in the lateral direction A and the transverse direction T, as shown in Figure 6b. 3) Finally, the spring 60 is mounted. In the embodiment shown in Figure 6b, only one spring 60 is shown. Alternatively, the type and size of the spring can be selected according to the actual demands to obtain the desired spring force. Here, two or more springs can be used.

According to the crank and connecting rod mechanism of the wiper system of the embodiment, by providing a slidable component, i.e., the sliding ball socket 100, the wiping angle of the wiper system is reduced when the snow resistance is larger than a predetermined value. The crank and connecting rod mechanism comprises a small amount of components, has a simple structure, and is easy to manufacture and assemble.

A hole 90 formed in the sliding ball socket 100 is also shown in the drawings for accommodating a ball portion of the ball pin 30 connecting the crank 50 with the connecting rod 20.

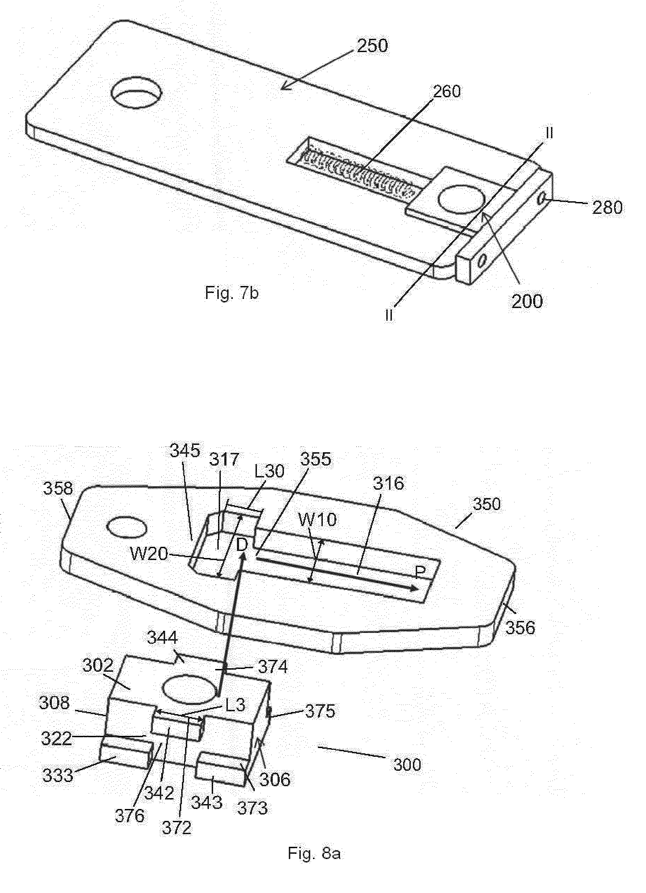

Figures 7a and 7b show a portion of a crank and connecting rod mechanism according to a second embodiment of the invention, in which the reference numbers are obtained from the reference numbers of corresponding elements of the first embodiment by adding an increment 200.

A slot 255 of a crank 250 extends into the crank 250 perpendicularly from a right end surface 256 toward a left end surface 258, and so, the slot 255 elongates in the longitudinal direction L and opens on the right. The slot 255 is defined by the edges 225, 235 and 245.

The sliding ball socket 200 has the same structure as the sliding ball socket 100 of the first embodiment.

Different from the first embodiment, in the second embodiment, a fixing endcap 280 is further provided for attaching fixedly the sliding ball socket 200 to the crank 250.

When the sliding ball socket 200 is mounted to the crank 250, 1) as shown in Figure 7a, the sliding ball socket 200 is inserted into the slot 255 from an opening at a right end of the slot 255, with an upper surface 202 of the sliding ball socket 200 upwards and a lower surface 204 downwards, so that a side surface 208 of the sliding ball socket 200 points the right end surface 256, a side surface 212 is adjacent to a side surface 262, and then notches 222 and 224 of the sliding ball socket 200 are snapped onto the edges 235 and 245 defining the slot 255, which locks the sliding ball socket 200 with the crank 250 in the lateral direction A and in the transverse direction T, 2) as shown in Figure 7b, the fixing endcap 280 is mounted, and the fixing endcap 280 can be attached to the side surface 256 of the crank 250 in any known manner, for example, by means of bolts (not shown) extending through a hole 282 of the fixing endcap 280, or by riveting or the like, and 3) a spring 260 is mounted between the edge 225 and a side surface 206 of the sliding ball socket 200. Likewise, one, two or more springs can be used according to actual demands.

The second embodiment has an advantage that the structural size of the sliding ball socket 200 is not limited by the slot 255 of the crank 250.

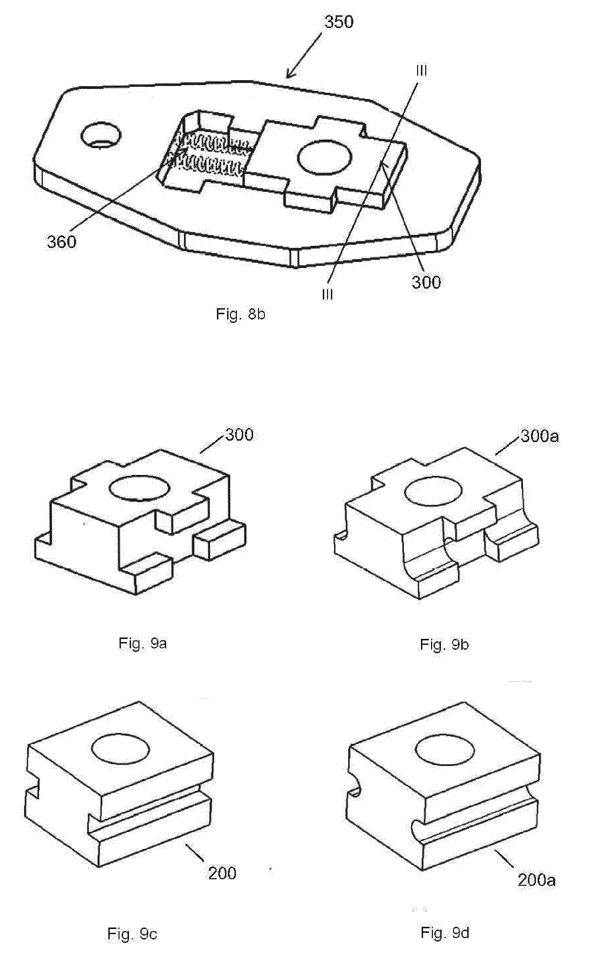

Figures 8a and 8b show a portion of a crank and connecting rod mechanism according to a third embodiment of the invention, in which the reference numbers are obtained from the reference numbers of corresponding elements of the first embodiment by adding an increment 300.

In the third embodiment, a slot 355 of a crank 350 has a general T shape, and comprises a narrower portion 316 proximate to a right side surface 356 of the crank 350 and a wider portion 317 proximate to a left side surface 358. The narrower portion 316 has the width W10, and the wider portion 317 has the width W20 greater than the width W10

A sliding ball socket 300 comprises a side surface 306 which is adjacent the side surface 356 when the sliding ball socket 300 is mounted on the crank 350, and an opposite side surface 308. The sliding ball socket 300 comprises notches 322 and 324 at another pair of opposite surfaces.

Different from the sliding ball socket 100, cutout segments are provided in upper walls 372 and 374 defining the notches 322 and notch 324 in a way that remaining segments 342 and 344 of the upper walls 372 and 374 are aligned with each other in the lateral direction A, and the length L3 is substantially equal to or smaller than the length L30 of the wider portion 317. Alternatively, the remaining segments 342 and 344 which are aligned in the lateral direction A can be closer to the side surface 306 (or the side surface 308) of the sliding ball socket 300 or can be aligned with the side surface 306 (or the side surface 308) or can be in the middle between the side surfaces 306 and 308. In other embodiments, each of the remaining segments 342 and 344 may comprise two or more sub-segments, as long as the distance between the right side surface of the right most sub-segment and the left side surface of the left most sub-segment is equal to the length L3.

In addition, lower walls 373 and 375 defining the notches 322 and 324 are also provided with cutout segments, so that the lower wall 373 comprises remaining segments 333 and 343. The lower wall 375 has a structure corresponding to that of the lower wall 373. In this embodiment, the remaining segments 333 and 343 extend from one of the side surfaces 308 and 306 toward the other respectively. Alternatively, the number, lengths and positions of the remaining segments may vary.

For assembling the sliding ball socket 300 onto the crank 350, 1) the sliding ball socket 300 is mounted into the general T-shaped the slot 355 upwards along an arrow D from a lower surface of the crank 350 in a manner that the remaining segments 342 and 344 of the sliding ball socket 300 are aligned with the wider portion 317, until the lower surface 354 of the crank 350 abuts against the remaining segments 333 and 343 of the lower wall 373 of the sliding ball socket 300, 2) the sliding ball socket 300 is slided into the narrower portion 316 along an arrow P, and 3) a spring 360 is amounted. Two springs 360 are shown in Figure 8b.

Figure 9a is another view of the sliding ball socket 300 of the third embodiment according to the invention, and Figure 9b shown a variant 300a. The difference between the sliding ball sockets 300 and 300a is a fillet is formed between the lower wall 373 and an inner wall 376 of the notch 322 of the sliding ball socket 300a, to avoid the possible stress concentration. As known in the prior art, the sliding ball socket may be a plastic part produced by injection molding by means of a mold. The sliding ball sockets 300 and 300a have advantages of simple manufacture and no requirement of a mold slider.

Figure 9c is another view of the sliding ball socket 200 of the second embodiment according to the invention, and Figure 9b shows a variant 200a. The difference between the sliding ball sockets 200 and 200a is the notch 222 of the sliding ball socket 200a has a cross sectional shape of a smooth curve, for example, semi-circular, to avoid the possible stress concentration. However, the mold slider is needed to assist in manufacturing the sliding ball sockets 200 and 200a.

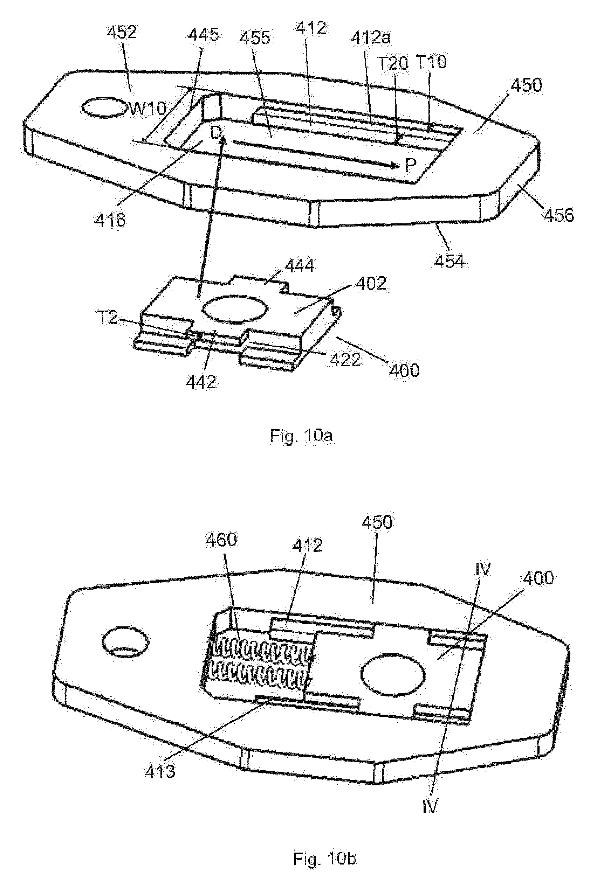

A fourth embodiment according to the invention will be described with reference to Figures 10a and 10b.

In the fourth embodiment, as the slot 55 of the crank 50, a slot 455 of a crank 450 elongates in the longitudinal direction L, and has the width W10. Protruding portions 412 and 413 protrude toward each other from opposite inner walls of the slot 455 in the longitudinal direction L, and the distance between the protruding portions 412 and 413 is W20. The protruding portions 412 and 413 do not extend over the entire longitudinal length of the respective inner walls, and instead, the distance between left end surfaces of the protruding portions 412 and 413 and a left edge 445 of the slot 455 is L10. In the transverse direction T, the distance between an upper surface 412a of the protruding portions 412 and 413 and an upper surface 452 of the crank 450 is T10, and the thickness of the protruding portions 412 and 413 is T20.

A sliding ball socket 400 in the fourth embodiment has a substantially same structure as the sliding ball socket 300 of the third embodiment. In particular, the thickness T1 of remaining segments 442 and 444 of upper walls in the transverse direction T is about T10, the distance between the upper walls 472 and 474 is about T20, and the total thickness of the sliding ball socket 400 in the transverse direction T is substantially equal to the total thickness of the crank 450 in the transverse direction T.

When the sliding ball socket 400 is mounted onto the crank 450, as shown in Figure 10a, 1) with the remaining segments 442 and 444 of the upper walls 472 and 474 of the sliding ball socket 400 being aligned with the portion 416 of the slot 455 of the crank 450 in the longitudinal direction L other than the protruding portions 412 and 413, the sliding ball socket 400 is mounted into the slot 455 of the crank 450 upwards along an arrow D, so that the notches 422 and 424 of the sliding ball socket 400 are aligned in the longitudinal direction L with the protruding portions 412 and 413 of the crank 450, b) the sliding ball socket 400 is slided rightwards to a right end of the slot 455 along the arrow P, and c) a spring 460 is amounted. Likewise, two springs 460 are shown in this embodiment.

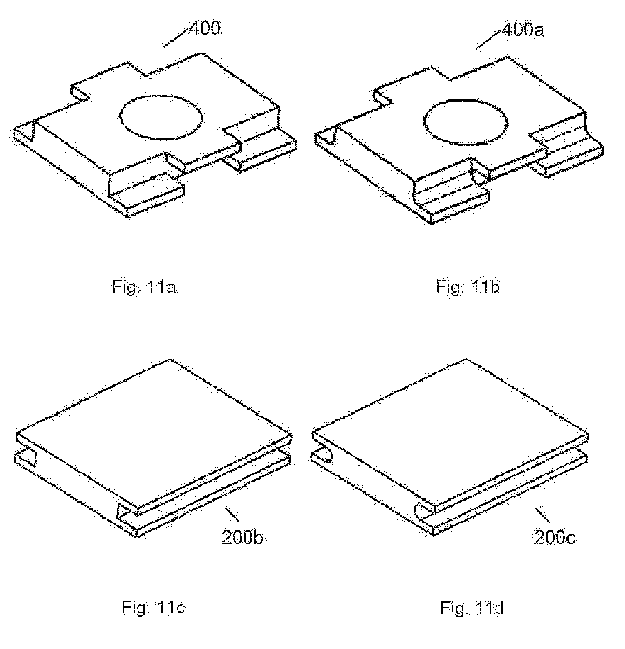

Figure 11a shows another view of the sliding ball socket 400, and Figure 11b shows a variant 400a. Similarly, the sliding ball sockets 400 and 400a can be manufactured simply without the mold slider.

Variants of the second embodiment according to the invention can be conceived by those skilled in the art. The protruding portion feature of the slot of the fourth embodiment can be incorporated into the crank 250 of the second embodiment. And correspondingly, the sizes of corresponding portions of the sliding ball socket 200 are changed, for example, a sliding ball socket 200b in Figure 11c, and a further variant of the sliding ball socket 200b, a sliding ball socket 200c, is shown in Figure 11d. Similarly, the mold slider is needed for manufacturing the sliding ball sockets 200b and 200c.

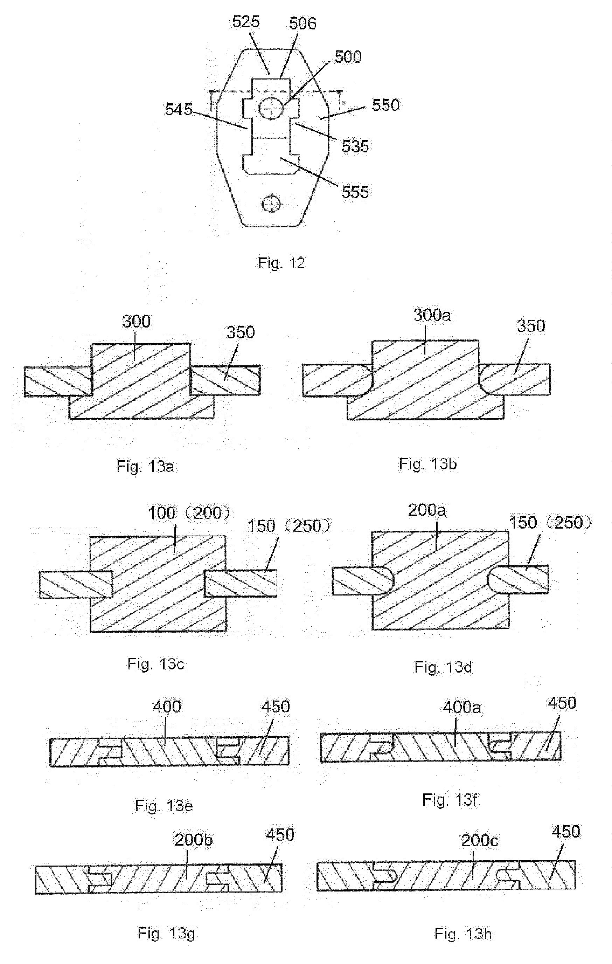

Figure 12 shows a fifth embodiment according to the invention, in which a crank 550 in the embodiment is the same as the crank 350 of the third embodiment. Different from the sliding ball socket 300, other than notches corresponding to the notches 322 and 324 of the sliding ball socket 300, the sliding ball socket 500 is provided on a side surface 506 with a further notch (invisible in Figure 12). For assembling the sliding ball socket 500 onto the crank 550, the notches on opposite side surfaces of the sliding ball socket 500 are engaged onto edges 535 and 545 defining a slot 555, and the further notch of the sliding ball socket 500 is engaged on an edge 525 defining the slot 555.

Figure 13a is a cross sectional view through a cross section III in Figure 8b, in which the sliding ball socket 300 and the crank 350 are shown. Figure 13b shows a view corresponding to that of Figure 13a in which the sliding ball socket 300a in Figure 9a is mounted on the crank 350. Corresponding to the sliding ball socket 300a, a fillet is provided at a connecting portion of a lower wall and an inner wall of the slot 355. Figure 13c is a cross sectional view through a cross section I in Figure 6b or through a cross section II in Figure 7b, in which the sliding ball socket 100 and the crank 150 or the sliding ball socket 200 and the crank 250 are shown. Figure 13d is a view corresponding to that of Figure 13c in which the sliding ball socket 200a in Figure 9d is mounted on the crank 150 or the crank 250. Corresponding to the sliding ball socket 200a, a fillet is provided at a connecting portion of a lower wall and an inner wall of the slot 155 or 255. Figure 13e is a cross sectional view through a cross section IV in Figure 10b, in which the sliding ball socket 400 and the crank 450 are shown. Figure 13f is a view corresponding to that of Figure 13e in which the sliding ball socket 400a in Figure 11b is mounted to the crank 450. Corresponding to the sliding ball socket 400a, a fillet is provided at a connecting portion of a lower wall and an inner wall of the slot 455. Figure 13g is a cross sectional view through the cross section IV, in which the sliding ball socket 200b in Figure 11c is mounted to the crank 450. Figure 13h is a cross sectional view through the cross section IV, in which the sliding ball socket 200c in Figure 11d is mounted to the crank 450. Corresponding to the sliding ball socket 200c, a fillet is provided at a connecting portion of a lower wall and an inner wall of the slot 555.

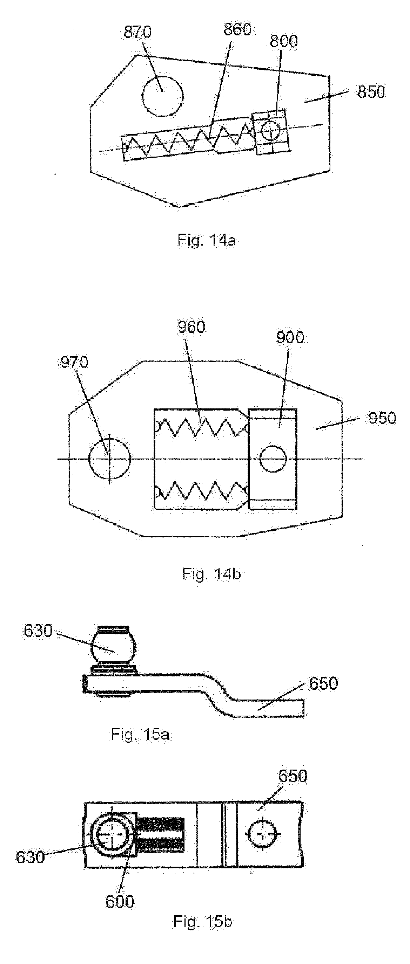

Figures 14a and 14b show possible mounting manners of a spring of a crank and connecting rod mechanisms according to the invention.

In a crank and connecting rod mechanism of Figure 14a, a longer spring 860 is provided, and in contrast, a crank 850 is shorter. A reference number 870 refers to an output shaft of a driving assembly of a wiper system. In this case, the spring 860 and the output shaft 870 may be offset from each other in the lateral direction A, and a more compact structure is thus obtained.

Figure 14b shows a condition that two springs 960 are provided. In this embodiment, a crank 950 is relatively wider to accommodate two springs 960.

Two ends of the spring of the crank and connecting rod mechanism can be fixed on the crank and the sliding ball socket respectively by any suitable manner known by those skilled in the art. The crank and the sliding ball socket are formed with holes for accommodating the respective ends of the spring respectively or rings for hooking and fixing the spring respectively.

Figure 15 shows a portion of a crank and connecting rod mechanism according to a sixth embodiment of the invention. In this embodiment, a ball pin 630 and a sliding ball socket 600 are formed as an integral part. In addition, every feature of the above embodiments of the invention is also applied to this embodiment.

A crank and connecting rod mechanism of a wiper system of the invention, and in particular, preferred embodiments of a crank and a sliding ball socket and connections therebetween, is described above. In the wiper system according to the invention, the crank and the connecting rod is connected with a joint assembly by means of an elastic member. When a force in the direction along the length of the crank transferred to the sliding ball socket via the connecting rod is larger than an inherent spring force of a spring, the sliding ball socket and the connecting rod connected with it compress the spring toward an end of the crank at which the crank is connected with an output shaft of a driving assembly. The effective length of the crank is shortened and a wiping angle of the wiper system is reduced, which achieves snow-load protection effectively.

It should be appreciated for those skilled in the art that the present invention is not be limited to the embodiments described above and shown in the drawings. Instead, all embodiments falling within the scope of the invention defined by the following claims are covered by the invention.

## Claims

1. A crank and connecting rod mechanism for a wiper system comprising:
a crank which is configured to be connected with an output shaft of a driving assembly of the wiper system and is configured for outputting a rotational movement of the output shaft;
a connecting rod which is configured to be connected with a wiper arm of the wiper system and is configured for driving the wiper arm to reciprocatingly swing; and
a joint assembly which is configured for connecting the crank with the connecting rod, the joint assembly comprising a ball pin connected with the connecting rod and a slider connected to the ball pin, the slider and the output shaft being connected to opposite ends of the crank, wherein the slider and the connecting rod connected thereto are slidable in a direction along the length of the crank relative to the crank when a force in this direction transferred to the slider via the connecting rod and the ball pin is larger than a certain critical value.

2. The crank and connecting rod mechanism according to claim 1, wherein the crank is formed with a slot extending in the direction along the length of the crank, and the sliding member is mounted in the slot and is slidable in the slot relative to the crank.

3. The crank and connecting rod mechanism according to claim 1 or 2, wherein an elastic member is provided between the crank and the sliding member in the direction along the length of the crank, and wherein when the force in the length direction of the crank transferred to the sliding member via the connecting rod and the ball pin is larger than an inherent spring force of the elastic member, the elastic member is compressed, and the sliding member and the connecting rod connected with it slide in the direction along the length of the crank relative to the crank.

4. The crank and connecting rod mechanism according to claim 3, wherein the elastic member comprises one or more springs.

5. The crank and connecting rod mechanism according to any one claims 1 to 4, wherein the sliding member is formed with a hole extending in an extending direction of a central axis of the ball pin, and a ball portion of the ball pin is fixed in the hole, and wherein the extending direction of the central axis of the ball pin is perpendicular to the direction along the length of the crank.

6. The crank and connecting rod mechanism according to any one claims 1 to 4, wherein the sliding member is formed integrally with the ball pin.

7. The crank and connecting rod mechanism according to any one claims 2 to 6, wherein the slot of the crank opens in the direction along the length of the crank at an end opposite to an end where the crank is connected with an end of the output shaft, and is defined by first and second edges in the direction along the length of the crank and a third edge perpendicular to the first and second edges, and wherein the crank and connecting rod mechanism further comprises a stop for closing the sliding member in the slot.

8. The crank and connecting rod mechanism according to any one claims 2 to 6, wherein the slot of the crank is formed closed in the crank, and is defined by first and second edges in the direction along the length of the crank and third and fourth edges perpendicular to the first and second edges, and wherein the third edge is closer to the end of the crank at which the crank is connected with the output shaft than the fourth edge.

9. The crank and connecting rod mechanism according to claim 7 or 8, wherein the sliding member has an H shape, the sliding member comprises opposite first and second side surfaces which are parallel to the direction along the length of the crank when the sliding member is assembled on the crank, the first and second side surfaces are formed with first and second notches respectively, and the first and second notches being configured for receiving the first and second edges when the sliding member is mounted in the slot of the crank.

10. The crank and connecting rod mechanism according to claim 9, wherein the crank and connecting rod mechanism further comprises protruding portions, the protruding portions protrude perpendicularly and sysmetrically from inner surfaces of the first and second edges into the slot, the protruding portions do not extend over the entire length of the respective edges in the direction along the length of the crank and have a first distance from an inner surface of the third edge, and the protruding portions has a thickness smaller than that of the crank and is centered in a thickness direction of the crank.

11. The crank and connecting rod mechanism according to claim 9 or 10, wherein the sliding member comprises an end surface which is parallel to the direction of the central axis of the ball pin when it is mounted on the crank, and the end surface is formed with a third notch.

12. A wiper system comprising:
a driving assembly which is configured for driving the wiper system and comprising an output shaft, the output shaft being configured for outputting a rotational movement;
a crank and connecting rod mechanism according to any one of claims 1-11, the crank of the crank and connecting rod mechanism being connected with the output shaft; and
a wiper arm which is configured to be connected with the connecting rod of the crank and connecting rod mechanism, the rotational movement of the output shaft of the driving assembly being converted into a reciprocatingly swinging movement of the wiper arm via the crank and connecting rod mechanism.
